# EUROPÄISCHE PATENTANMELDUNG

(11) **EP 2 728 505 A1**
(43) Veröffentlichungstag der Anmeldung: **07.05.2014**
(21) Anmeldenummer: 12191364.4
(22) Anmeldetag: 06.11.2012
(51) Int. Cl.: G06F 21/12

(54) **Baugruppe eines modularen Automatisierungsgerätes**

(71) Anmelder: Siemens Aktiengesellschaft, 80333 München (DE)
(72) Erfinder: Reichl, Wolfgang, 76467 Bietigheim (DE)

(57) **Zusammenfassung**

Die Erfindung betrifft eine Baugruppe eines modularen Automatisierungsgerätes, welche mit Hardware-Modulen und/oder Modulen (15) einer Firmware (14) zur Verwirklichung von Automatisierungsfunktionen versehen ist. Es werden Maßnahmen vorgeschlagen, mittels derer eine vorgegebene Teilmenge aus den Hard- und/oder Firmware-Modulen (15) freigeschaltet werden.

## Beschreibung

Die Erfindung betrifft eine Baugruppe eines modularen Automatisierungsgerätes, welche mit Hardware-Modulen und/oder Modulen einer Firmware zur Verwirklichung von Automatisierungsfunktionen versehen ist. Ferner betrifft die Erfindung eine Anordnung mit einem Lizenzmanager und einer solchen Baugruppe sowie ein Verfahren zum Einstellen einer Leistungsstufe für eine derartige Baugruppe.

Eine derartige Baugruppe sowie eine derartige Anordnung sind aus dem Siemens-Katalog ST 70, Kapitel 6, Ausgabe 2011 bekannt. Die Baugruppe ist in Form einer Zentralbaugruppe bzw. CPU-Baugruppe ausgebildet, wobei ein Anwender eine oder mehrere Zentralbaugruppen aus einer Vielzahl von Zentralbaugruppen unterschiedlicher Leistungsklassen nach Maßgabe einer zu lösenden Automatisierungsaufgabe auswählen kann. Je nach Einsatzfall kann es z. B. erforderlich sein, Standard-Zentralbaugruppen, fehlersichere oder hochverfügbare Zentralbaugruppen einzusetzen, wobei diese sich sowohl im Hinblick auf Hardware-Module als auch im Hinblick auf Firmware-Module unterscheiden. Beispielsweise unterscheiden sich die Zentralbaugruppen bezüglich der Speichergröße, des so genannten F (fehlersicher)-Timers zur Verwirklichung von F-Funktionalitäten, der Schnittstellen, des Systemtaktes oder der Größe des ladbaren Anwender- bzw. Steuerprogramms. Darüber hinaus sind gewöhnlich zur Erstellung eines Anwender- bzw. Steuerprogramms sowie zum Projektieren, Konfigurieren und/oder Parametrieren eines Automatisierungsgerätes mit derart unterschiedlichen Baugruppen unterschiedliche Programmierpakete erforderlich.

Aufgrund der Vielzahl von Zentralbaugruppen unterschiedlicher Leistungsklassen (Leistungsfähigkeit, Leistungsstufen) ist eine aufwendige Lagerhaltung erforderlich. Ferner muss stets überprüft werden, ob z. B. ein sporadisch auftretender Fehler in der Firmware einer Zentralbaugruppe einer Leistungsklasse auch in der Firmware der Zentralbaugruppen anderer Leistungsklassen vorkommen kann. Darüber hinaus ist es zeitaufwendig, beispielsweise vor Ort in einer rauen Prozessumgebung eine Zentralbaugruppe geringer Leistungsklasse mit einer Zentralbaugruppe höherer Leistungsklasse auszutauschen, um eine Anpassung an eine geänderte zu lösende Automatisierungsaufgabe bewerkstelligen zu können.

Der Erfindung liegt daher die Aufgabe zugrunde, eine Baugruppe sowie eine Anordnung der eingangs genannten Art zu schaffen, mittels deren derartige Nachteile vermieden werden. Darüber hinaus ist ein Verfahren zum vereinfachten Einstellen einer Leistungsstufe für eine derartige Baugruppe anzugeben.

Diese Aufgabe wird im Hinblick auf die Baugruppe dadurch gelöst, dass die Baugruppe mit einem Transponder zur drahtlosen Kommunikation mit einem Lizenzmanager versehen ist, wobei die Baugruppe dazu ausgebildet ist, in Abhängigkeit eines vom Lizenzmanager dem Transponder übermittelten Lizenzschlüssels eine vorgegebene Teilmenge aus den Hardware-Modulen und/oder den Modulen der Firmware freizuschalten.

Bezüglich der Anordnung wird die Aufgabe durch die im Anspruch 4 und im Bezug auf das Verfahren durch die im Anspruch 5 angegebenen Maßnahmen gelöst.

Vorteilhaft ist, dass eine Anpassung oder eine Änderung der Leistungsklasse einer Baugruppe leicht möglich ist.

Die Erfindung geht von der Idee aus, auf unterschiedliche Hardware-Ausbaustufen zu verzichten und stattdessen allen Baugruppen eine gemeinsame Hardware bereitzustellen. Die unterschiedlichen Leistungsklassen der Baugruppen werden über eine Lizenz bzw. über einen Lizenzschlüssel eingerichtet, der käuflich erworben werden kann.

Mittels dieser Lizenz sind indirekt auch die Rechte an der Nutzung eines Programmierpakets oder von Teilen dieses Programmierpakets eines Engineering-Systems enthalten, welches zum Erstellen eines Steuer- bzw. Anwenderprogramms sowie zum Projektieren, Konfigurieren und/oder Parametrieren der Baugruppen vorgesehen ist. Für die Baugruppen aller Leistungsklassen wird lediglich ein Programmierpaket bereitgestellt, welches ein Anwender nutzen kann, um beispielsweise ein Steuerprogramm für eine fehlersichere Zentralbaugruppe zu erstellen. Allerdings sind die fehlersicheren Teile bzw. Software-Module des Anwenderprogramms nur dann auf der Baugruppe ablauffähig, falls der Anwender die Lizenz für eine fehlersichere Zentralbaugruppe erworben hat und mittels dieser die entsprechenden Hard- und/oder Firmware-Module auf der Baugruppe freigeschaltet wurden. Software-Schutzmechanismen für das Programmpaket oder Teile dieses Programmierpakets an sich, z. B. Software-Schutzmechanismen mittels eines so genannten Dongles, sind daher nicht erforderlich.

Es wird darauf hingewiesen, dass unter der Formulierung "eine vorgegebene Teilmenge aus den Hardware- und/oder Firmware-Modulen" alle für den Betrieb der Baugruppe einer Leistungsklasse erforderlichen Hardware- und/oder Firmware-Module zu verstehen sind. Falls alle Hardware- und/oder Firmware-Module einer Baugruppe zur Verwirklichung einer Leistungsklasse erforderlich sind, repräsentiert in diesem Fall die Menge aller Hardware- und/oder Firmware-Module dieser Baugruppe - also die Gesamtmenge der Hardware- und/oder Firmware-Module - die Teilmenge.

In einer Ausgestaltung der Erfindung weist die Baugruppe eine Schnittstelle auf, die für einen Informationsaustausch zwischen dem Transponder und der Firmware vorgesehen ist, wobei die Firmware mit einem Freischalt-Modul zur Freischaltung der Teilmenge aus den Hardware-Modulen und/oder der Module der Firmware versehen ist. Dies ermöglicht, dass in einem Firmware-Kommunikations-Modul der Schnittstelle ein Kommunikationsprotokoll für diesen Informationsaustausch definiert bzw. festgelegt werden kann, wobei das Kommunikationsprotokoll geheim zu halten ist, um Manipulationen im Hinblick auf den Lizenzschlüssel zu vermeiden.

Gemäß einer weiteren Ausgestaltung der Erfindung ist vorgesehen, dass die Baugruppe vergossen ist, wodurch einerseits die Baugruppe korrosionsgeschützt ist und anderseits der Transponder und die Schnittstelle bezüglich des Lizenzschlüssels nicht einfach manipuliert werden können.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: eine Anordnung mit einem Lizenzmanager und einer Zentralbaugruppe und
- Figur 2: Bestandteile eines Automatisierungsgerätes

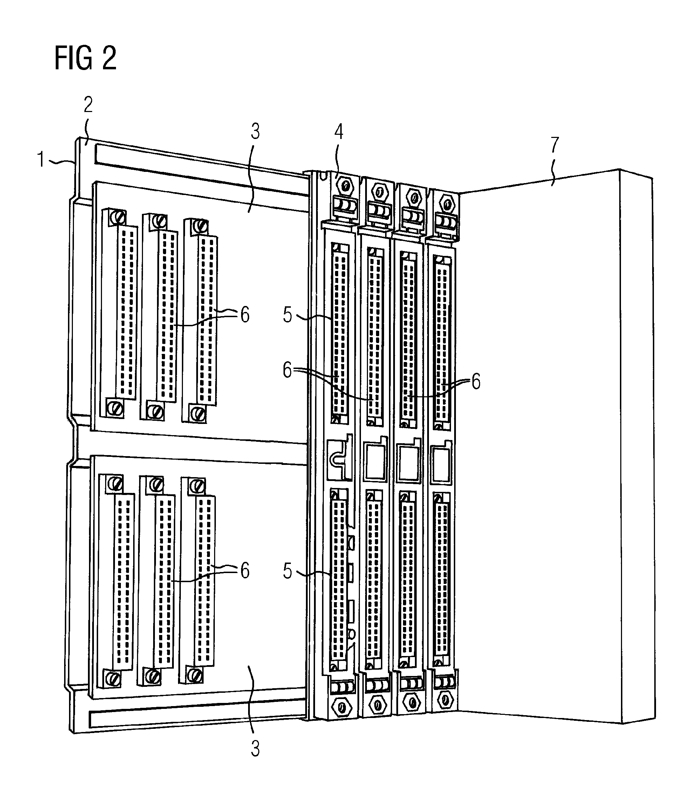

Es wird zunächst auf Figur 2 verwiesen, in welcher Bestandteile eines Automatisierungsgerätes dargestellt sind. Ein Baugruppenträger 1 weist einen Aluminiumträger 2, zwei auf diesen Träger 2 montierte Busleiterplatten 3 sowie einen Kunststoffträger 4 auf, durch dessen Öffnungen 5 Steckanschlüsse 6 der Busleiterplatten 3 zur Anschlussseite des Baugruppenträgers 1 ragen. Im dargestellten Ausführungsbeispiel ist lediglich eine Zentralbaugruppe 7 gezeigt, die auf einen der Steckanschlüsse 6 montiert ist. Selbstverständlich umfasst das Automatisierungsgerät weitere Baugruppen, z. B. Baugruppen in Form von Analog- und/oder Digitalein/-ausgabebaugruppen zum Anschluss von Aktoren und/oder Sensoren, Kommunikationsbaugruppen, Reglerbaugruppen sowie weitere für den Betrieb des Automatisierungsgerätes und zur Steuerung eines technischen Prozesses geeignete Baugruppen. Darüber hinaus kann das Automatisierungsgerät eine weitere Zentralbaugruppe aufweisen, um ein hochverfügbares Automatisierungsgerät mit einem redundant ausgebildeten Aufbau zu verwirklichen, aufgrund dessen die Verfügbarkeit einer zu steuernden Anlage erhöht wird.

Um einerseits für die Zentralbaugruppen eine gemeinsame Hardware ohne unterschiedliche Hardware-Ausbaustufen bereitzustellen und andererseits in den jeweiligen Zentralbaugruppen unterschiedliche Leistungsklassen einrichten zu können, weist die jeweilige Zentralbaugruppe einen Transponder, eine mit einem Freischalt-Modul versehene Firmware sowie eine Kommunikations-Schnittstelle für einen Informationsaustausch zwischen dem Transponder und der Firmware auf, wobei mittels eines Lizenzmanagers dem Transponder der jeweiligen Zentralbaugruppe ein Lizenzschlüssel, welcher eine Leistungsklasse, Leistungs- oder Ausbaustufe bzw. Leistungsfähigkeit der Zentralbaugruppe repräsentiert bzw. bestimmt, drahtlos übermittelt wird. Für jede einstellbare Leistungsklasse ist ein Lizenzschlüssel vorgesehen, welcher ein Anwender bzw. Kunde von einem Hersteller oder Lieferanten der Zentralbaugruppen erwerben bzw. kaufen kann.

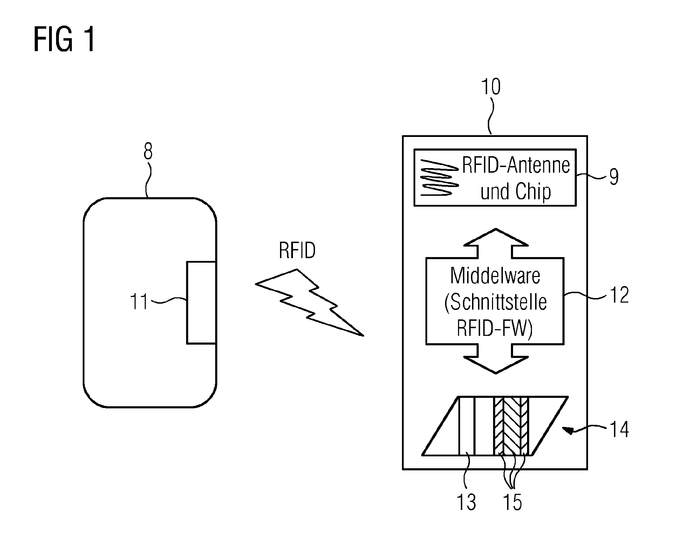

Es wird im Folgenden auf Figur 1 verwiesen, in der in einer vereinfachten Darstellung eine Anordnung mit einem Lizenzmanager und einer Zentralbaugruppe gezeigt ist.

In einer Fertigung von Zentralbaugruppen übermittelt ein Lizenzmanager 8 einem Transponder 9 einer Zentralbaugruppe 10 einen Lizenzschlüssel 11, welcher eine vom Kunden erworbene Leistungsklasse definiert. Um die Gefahr einer Manipulation des Lizenzschlüssels 11 zu verringern, ist der Lizenzmanager 8, der z. B. mittels einer Software eines Personalcomputers verwirklicht ist, in einem entsprechend ausgestalteten sicheren Bereich der Fertigung bzw. Werkshalle angeordnet bzw. aufgestellt. In diesem Bereich wird die Zentralbaugruppe 10 zum Einrichten, Einstellen, Parametrieren und/oder Programmieren der Leistungsklasse der Zentralbaugruppe 10 in die Nähe des Lizenzmanagers 8 derart platziert, um eine Nahfeld-Kommunikation zwischen dem Lizenzmanager 8 und dem Transponder 9 zu gewährleisten. Mittels eines definierten Protokolls kommuniziert der Transponder 9 über eine Schnittstelle 12 der Zentralbaugruppe 10 mit einem Freischalt-Modul 13 einer Firmware 14, wobei die Schnittstelle 12 den empfangenen Lizenzschlüssel 11 in einen für die Firmware 14 geeigneten bzw. interpretierbaren Code umsetzt. Das Freischalt-Modul 13 ist derart ausgebildet, in Abhängigkeit des Lizenzschlüssels 11 eine vorgegebene Teilmenge von weiteren Firmware-Modulen 15 der Firmware 14 sowie eine Teilmenge von hier nicht dargestellten Hardware-Modulen der Zentralbaugruppe 10 freizuschalten, wobei diese Hardware-Module gewöhnlich während des Betriebs der Zentralbaugruppe 10 mittels dieser weiteren Firmware-Modulen 15 gesteuert werden. Die Zentralbaugruppe 10 mit freigeschalteten Firm- und Hardware-Modulen repräsentiert eine mittels des Lizenzschlüssels 11 signierte Zentralbaugruppe mit entsprechend eingerichteter Leistungsklasse, wobei eine derart "getaufte" Zentralbaugruppe zum Einbau in ein Automatisierungsgerät des Kunden ausgeliefert wird.

Die Erfindung lässt sich somit wie folgt kurz zusammenfassen: Eine Baugruppe 10 eines modularen Automatisierungsgerätes, welche mit Hardware-Modulen und/oder Modulen 15 einer Firmware 14 zur Verwirklichung von Automatisierungsfunktionen versehen ist, zeichnet sich dadurch aus, dass die Baugruppe 10 mit einem Transponder 9 zur drahtlosen Kommunikation mit einem Lizenzmanager 8 versehen ist, wobei die Baugruppe 10 dazu ausgebildet ist, in Abhängigkeit eines vom Lizenzmanager 8 dem Transponder 9 übermittelten Lizenzschlüssels 11 eine vorgegebene Teilmenge aus den Hardware- und/oder Firmware-Modulen 15 freizuschalten.

## Patentansprüche

1. Baugruppe eines modularen Automatisierungsgerätes, welche mit Hardware-Modulen und/oder Modulen (15) einer Firmware (14) zur Verwirklichung von Automatisierungsfunktionen versehen ist, **dadurch gekennzeichnet, dass** die Baugruppe (10) mit einem Transponder (9) zur drahtlosen Kommunikation mit einem Lizenzmanager (8) versehen ist, wobei die Baugruppe (10) dazu ausgebildet ist, in Abhängigkeit eines vom Lizenzmanager (8) dem Transponder (9) übermittelten Lizenzschlüssels (11) eine vorgegebene Teilmenge aus den Hardware- und/oder Firmware-Modulen (15) freizuschalten.

2. Baugruppe nach Anspruch 1, **dadurch gekennzeichnet, dass** die Baugruppe (10) eine Schnittstelle (12) aufweist, die für einen Informationsaustausch zwischen dem Transponder (9) und der Firmware (14) der Baugruppe (10) vorgesehen ist, wobei die Firmware (14) mit einem Freischalt-Modul (13) zur Freischaltung der Teilmenge versehen ist.

3. Baugruppe nach Anspruch 1 oder 2, **dadurch gekennzeichnet, dass** die Baugruppe (10) beschichtet bzw. vergossen ist.

4. Anordnung mit einem Lizenzmanager und einer Baugruppe nach einem der Ansprüche 1 bis 3.

5. Verfahren zum Einstellen einer Leistungsstufe einer Baugruppe eines modularen Automatisierungsgerätes, welche mit Hardware-Modulen und/oder Modulen (15) einer Firmware (14) zur Verwirklichung von Automatisierungsfunktionen versehen ist, wobei die Baugruppe (10) mit einem Lizenzmanager (8) drahtlos verbunden wird und in Abhängigkeit eines vom Lizenzmanager (8) der Baugruppe (10) übermittelten Lizenzschlüssels (11) eine vorgegebene Teilmenge aus den Hardware- und/oder Firmware-Modulen (15) freigeschaltet wird.

6. Verfahren nach Anspruch 5, **dadurch gekennzeichnet, dass** Informationen zwischen einem Transponder (9) der Baugruppe (10) und der Firmware (14) der Baugruppe (10) über eine Schnittstelle (12) ausgetauscht werden, wobei mit einem Freischalt-Modul (13) der Firmware (14) die Teilmenge freigeschaltet wird.
